# FASCICULE DE BREVET EUROPEEN

(11) **EP 2 545 005 B1**
(45) Date de publication et mention de la délivrance du brevet: **05.10.2016**
(21) Numéro de dépôt: 11712981.7
(22) Date de dépôt: 10.03.2011
(51) Int. Cl.: C02F 1/52, C02F 1/76, C02F 9/00, C02F 1/68

(54) **PRODUIT SOLIDE COMPACTE BICOUCHE DE PURIFICATION D'EAU**
FESTES KOMPAKTIERTES ZWEISCHICHTIGES PRODUKT ZUR WASSERREINIGUNG
SOLID COMPACTED BILAYER PRODUCT FOR WATER PURIFICATION

(30) Priorité: 10.03.2010 FR 1051721
(43) Date de publication de la demande: 16.01.2013
(73) Titulaire: Aquasure, 42170 St Just St Rambert (FR)
(72) Inventeur: BRANLARD, Paul, F-69005 Lyon (FR); SOQUET, Valérie, F-69003 Lyon (FR)
(74) Mandataire: Verriest, Philippe
(86) Numéro de dépôt international: PCT/FR2011/050482
(87) Numéro de publication internationale: WO 2011/110787

(56) Documents cités:
- WO-A2-2008/040884

## Description

La présente invention concerne un produit solide compacté de purification d'eau sous la forme d'au moins deux couches.

Le traitement de l'eau en vue de la purifier et/ou de la rendre potable fait l'objet de nombreuses recherches et est un sujet primordial pour l'humanité.

Parallèlement au développement de stations d'épuration et d'installations à grande échelle pour le traitement de l'eau des grandes agglomérations, en particulier dans les pays industrialisés, on cherche également à développer des moyens simples de traitement efficace et rapide d'un volume d'eau prédéterminé dans le but par exemple de rendre potable de l'eau issue d'un point d'eau naturel, comme un puits ou une mare, dans des endroits du monde ne pouvant bénéficier, pour des raisons d'accès difficile ou pour des raisons économiques, d'installations industrielles de traitement de l'eau. Ces eaux peuvent par exemple provenir de rivières ou être puisées dans le sol.

La purification d'une eau quelconque, en particulier en vue de la rendre potable, sous-entend plusieurs traitements et notamment une étape de clarification, destinée à séparer les matières organiques susceptibles d'être en suspension dans l'eau, et une étape de désinfection, destinée à tuer les bactéries présentes dans l'eau. La clarification se fait généralement par floculation et/ou coagulation puis sédimentation et filtration des substances organiques. La désinfection se fait généralement par libération de chlore actif bactéricide. La purification de l'eau se fait ainsi généralement en deux étapes successives, une première étape de clarification, suivie d'une deuxième étape de désinfection.

Par ailleurs, pour des raisons pratiques de manipulation et de stockage, et compte tenu de l'utilisation souhaitée, on cherche à disposer d'un moyen de purification d'eau sous la forme d'une composition solide, comme par exemple une pastille ou une tablette, de préférence prédosée, que l'on pourra simplement jeter dans le volume prédéterminé d'eau à purifier, sans qu'il soit nécessaire de mettre en oeuvre des moyens plus complexes qu'une simple agitation ponctuelle.

Des compositions solides pour clarifier et désinfecter de l'eau sont déjà connues.

Les documents WO2006/016073 et WO2008/040884 décrivent des compositions sous forme de tablettes pour purifier un volume prédéterminé d'eau, comprenant entre autres un agent floculant et un désinfectant libérant du chlore actif.

Toutefois, il a été constaté qu'une eau est d'autant plus difficile à clarifier efficacement qu'elle est peu turbide initialement. Or une très bonne clarification préalable est indispensable pour obtenir une désinfection efficace. En effet, comme vu ci-dessus, la désinfection se fait généralement par libération de chlore actif biocide destiné à tuer les bactéries éventuellement présentes dans l'eau une fois celle-ci clarifiée. Si l'étape de clarification préalable n'est pas quasi-totale au moment où débute l'action du chlore actif biocide, ce dernier peut être amené à chlorer des matières organiques restant en suspension du fait de la défaillance de l'étape préalable de clarification. Un tel phénomène est doublement dommageable à une bonne purification de l'eau à traiter : non seulement la chloration des matières organiques en suspension restant dans l'eau génère des sous-produits chlorés nocifs à la santé humaine mais une telle chloration, par la consommation non souhaitée de chlore actif vers les matières organiques en suspension, détourne une quantité non négligeable de chlore actif initialement disponible pour une action biocide, et l'étape de désinfection n'est ainsi pas optimale.

Pour compenser l'effet négatif d'un tel phénomène sur l'étape de désinfection, une solution est d'augmenter le taux de chlore actif biocide initial. Toutefois, pour des raisons tant écologiques qu'économiques, il n'est pas souhaitable d'augmenter la consommation de chlore actif biocide.

Ainsi, il serait intéressant de disposer d'un moyen de purification de l'eau qui consomme peu de désinfectant tout en étant aussi efficace que les moyens de purification déjà connus, même dans le cas où l'eau à traiter est initialement peu turbide.

Ainsi, il existe le besoin d'une composition simple à manipuler, à stocker et à utiliser, qui permettrait de clarifier un volume prédéterminé d'une eau quelconque de façon particulièrement efficace, même dans le cas où l'eau initiale à traiter n'est pas fortement turbide, dans le but de pouvoir ensuite désinfecter cette eau par action bactéricide, en particulier pour la rendre potable, sans qu'il soit nécessaire de consommer de grandes quantités de désinfectant.

La présente invention vise à remédier à ce problème en proposant une composition solide unique présentant une bonne cohésion, en particulier sous la forme d'une pastille ou d'une tablette, capable de clarifier efficacement une eau quelconque, même peu turbide, puis de la désinfecter sans surconsommation de désinfectant.

En particulier, la Demanderesse a découvert qu'en introduisant un agent de densification spécifique et un polyol particulier dans un produit de purification d'eau, il était possible d'obtenir un produit solide ayant une bonne cohésion rendant la manipulation de ce produit aisé, ce produit solide étant capable de réaliser l'étape de clarification d'une eau quelconque, et en particulier d'une eau peu trouble ou peu turbide initialement, de façon particulièrement efficace et donc d'optimiser la désinfection subséquente de cette eau.

Un premier objet de l'invention est un produit solide compacté de purification d'eau comprenant :
- au moins une première couche comprenant au moins un système floculant, et
- au moins une deuxième couche comprenant au moins un désinfectant libérant du chlore actif au contact de l'eau,
caractérisé en ce que :
ledit système floculant comprend au moins un polyol de poids moléculaire inférieur ou égal à 10 000 g/mol et au moins un agent de densification comprenant une composition de particules de matière insolubles dans l'eau et chimiquement inactives vis-à-vis du chlore actif et présentant une granulométrie telle que 80% de la masse de l'agent de densification est constituée de particules de taille moyenne allant de 5 µm à 80 µm.

Par « chimiquement inactives vis-à-vis du chlore actif », on entend, selon la présente demande, que les particules de l'agent de densification sont inertes vis-à-vis du chlore actif et ne sont pas capable de réagir chimiquement avec le chlore actif.

Le produit selon l'invention présente une bonne cohésion et permet de clarifier et de désinfecter efficacement toute eau, quelle que soit sa provenance et son état, et en particulier quel que soit son état de turbidité initial. Ainsi, l'eau d'une mare ou d'un puits, même initialement peu turbide, peut être purifiée et rendue apte à la consommation avec le produit selon l'invention.

La turbidité d'une eau désigne généralement la teneur de cette eau en matières qui la troublent. La turbidité est mesurée par néphélométrie et exprimée en NTU (nephelometric turbidity unit). La turbidité d'une eau peut varier d'une valeur proche de zéro (pour de l'eau très claire et donc très peu turbide) à des valeurs supérieures à 600 NTU pour des eaux naturelles par exemple issues de rivières ou de mares. En général, on parlera de turbidité faible pour une turbidité inférieure ou égale à 40 NTU et de turbidité forte pour une turbidité supérieure ou égale à 100 NTU. La limite maximum de la turbidité de l'eau destinée à la consommation humaine recommandée par L'OMS (Organisation Mondiale de la Santé) est de 5 NTU.

Le produit selon l'invention permet de rendre potable une eau, par exemple issue d'une rivière ou d'une mare, présentant une turbidité initiale supérieure à la limite maximale de 5 NTU recommandée par l'OMS : en particulier, le produit selon l'invention permet de rendre une telle eau potable, quelle que soit la valeur initiale de la turbidité de l'eau, notamment même si cette turbidité initiale est par exemple inférieure à 40 NTU.

Grâce à l'agencement spécifique et aux compositions particulières respectives de ses deux couches, le produit selon l'invention est facilement manipulable et permet de libérer dans un premier temps, le système floculant, qui précipite les substances minérales et organiques en suspension, puis, dans un deuxième temps, alors que les flocs formés par la précipitation des substances organiques et du système floculant ont décanté, l'agent désinfectant pour une action biocide ciblée sur les germes pathogènes présents dans l'eau.

En particulier, grâce à la composition particulière de la première couche, des flocs résultant de la précipitation des substances minérales et organiques en suspension ont la possibilité de se former, même si l'état de turbidité initial de l'eau à traiter est faible, c'est-à-dire par exemple est inférieur à 40 NTU. Ces flocs décantent ensuite rapidement et ce, avant que l'agent désinfectant ait libéré une quantité substantielle de chlore actif en vue de l'étape de désinfection.

En particulier, la composition spécifique de la première couche du produit selon l'invention, et notamment du système floculant, permet l'obtention de flocs de grande taille et de densité élevée, même si l'eau à traiter comportait initialement peu de matières organiques en suspension, de sorte qu'après décantation, les flocs s'agglomèrent et forment un lit au fond du récipient qui ne se redisperse pas aisément lors du soutirage de l'eau clarifiée.

Ainsi, le chlore actif est libéré dans une eau parfaitement clarifiée et son action bactéricide n'est pas entravée par la présence non souhaitée de matières organiques fortement consommatrices de chlore.

Le produit selon l'invention est écologique et économique: il ne consomme pas plus de désinfectant que nécessaire. Du fait de sa forme solide, il est simple et pratique à utiliser, à stocker et à manipuler.

Grâce au produit selon l'invention, une filtration de l'eau n'est pas nécessaire.

Le produit selon l'invention est un produit solide compacté comprenant au moins deux couches.

La première couche du produit selon l'invention comprend au moins un système floculant.

Par « système floculant », on entend, selon la présente demande, un système dont le ou les composés vont réagir avec les substances minérales et organiques en suspension présentes dans l'eau à purifier en provoquant leur précipitation sous la forme de flocs, c'est-à-dire de solides de masse volumique apparente égale ou supérieure à 1,010 g/cm³, qui vont, après décantation, se déposer et sédimenter au fond du volume d'eau à purifier. Le système floculant permet ainsi de clarifier l'eau à traiter.

Le système floculant du produit selon l'invention comprend au moins un polyol de poids moléculaire inférieur ou égal à 10 000 g/mol et au moins un agent de densification comprenant une composition de particules de matière insolubles dans l'eau et chimiquement inactives vis-à-vis du chlore actif et présentant une granulométrie telle que 80% de la masse de l'agent de densification est constituée de particules de taille moyenne allant de 5 µm à 80 µm.

La Demanderesse a trouvé que la combinaison dans le système floculant d'un polyol de poids moléculaire inférieur ou égal à 10 000 g/mol et d'un agent de densification présentant une telle granulométrie favorise la formation de flocs importants pouvant atteindre des tailles d'environ 2 à 4 mm à partir de matières organiques en suspension initialement peu volumineuses, par exemple de taille d'environ 1 mm. La présence d'un agent de densification présentant une telle granulométrie permet d'augmenter la vitesse de sédimentation dans l'eau de ces flocs, permettant ainsi leur décantation rapide et efficace et la clarification optimale de l'eau à traiter.

Dans une forme de réalisation, la répartition statistique moyenne de la granulométrie des particules de l'agent de densification satisfait aux pourcentages massiques de refus au tamis suivants :
D10 :>80µm,
D50 :>30µm, et
D90 :>5µm,
autrement dit, 10% de la masse de l'agent de densification est constituée de particules ayant des tailles supérieures à 80 µm, 50% de la masse de l'agent de densification est constituée de particules ayant des tailles supérieures 30 µm et 90% de la masse de l'agent de densification est constituée de particules ayant des tailles supérieures 5µm.

Les particules de l'agent de densification peuvent être choisies parmi toutes particules insolubles dans l'eau et chimiquement inertes vis-à-vis du chlore actif. Par exemple, l'agent de densification est choisi parmi les aluminosilicates naturels hydratés, comme le kaolin, ou calcinés, les aluminosilicates alcalins, comme les feldspath sodiques ou potassiques, les argiles, les métasilicates de calcium, comme la wollastonite, les silices, comme le sable, le quartz, broyé ou non, les carbonates de calcium naturels broyés, les silicates de magnésium hydratés, comme le talc, et leurs mélanges.

De préférence, l'agent de densification est du sable de silice micronisé. Un sable de silice micronisé convenant particulièrement au produit selon l'invention est le quartz broyé vendu par la société Sibelco France sous la dénomination commerciale « MILLISIL^{®} E10 » et dont la granulométrie satisfait aux conditions suivantes : pourcentages massiques de refus au tamis suivants :
D10:>80µm,
D50:>30µm, et
D90 :>5µm.

Le système floculant du produit selon l'invention comprend également un polyol de poids moléculaire inférieur ou égal à 10000 g/mol, de préférence inférieur ou égal à 5000 g/mol, de préférence encore inférieur ou égal à 3500 g/mol. Par « polyol », on entend, au sens de la présente demande un composé chimique organique comprenant au moins deux groupements hydroxyle (-OH). Le polyol présent dans le système floculant du produit selon l'invention est de préférence non ionisé, en particulier en milieu aqueux. Le polyol présent dans le système floculant du produit selon l'invention est de préférence un polyol, par exemple sous forme de poudre, comprenant au moins cinq atomes de carbone, de préférence au moins six atomes de carbone et au moins deux groupements hydroxyle (-OH). Dans une forme de réalisation de l'invention, le polyol est choisi parmi le sorbitol, le mannitol, la maltodextrine, le xylitol et leurs mélanges. Le xylitol est un polyol de formule C₅H₁₂O₅ et présentant un poids moléculaire d'environ 152 g/mol. Dans une forme de réalisation de l'invention, le polyol est choisi parmi le sorbitol, le mannitol, la maltodextrine et leurs mélanges. Par exemple, le polyol est la maltodextrine. La maltodextrine est un polysaccharide de formule C₆ₙH₍₁₀ₙ₊₂₎O₍₅ₙ₊₁₎ avec n variant de 2 à 20, et présentant donc un poids moléculaire variant d'environ 342 à environ 3258 g/mol. Alternativement, le polyol est le mannitol. Alternativement, le polyol est le sorbitol. Le mannitol et le sorbitol sont des polyols de formule C₆H₁₄O₆ et présentent un poids moléculaire d'environ 182 g/mol. Dans une forme de réalisation, le polyol présent dans le système floculant du produit selon l'invention a un poids moléculaire inférieur ou égal à 200 g/mol.

De préférence, l'agent de densification est présent dans la première couche à une teneur allant de 15 à 30% en poids, de préférence de 20 à 25% en poids, par rapport au poids total de la première couche.

De préférence, le polyol est présent dans la première couche à une teneur allant de 15 à 35% en poids, de préférence de 20 à 30% en poids, par rapport au poids de l'agent de densification.

De préférence, le système floculant comprend en outre au moins un sel de métal trivalent. Le système floculant peut également comprendre un alginate de sodium.

En effet, la combinaison d'un sel de métal trivalent, qui est un coagulant, et d'un alginate de sodium, qui est un floculant, avec l'agent de densification et le polyol de poids moléculaire inférieur ou égal à 10000 g/mol décrits ci-dessus, permet une bonne floculation et une meilleure agrégation des flocs formés par précipitation.

En particulier, une telle combinaison entraîne, même dans une eau initialement peu turbide, par exemple présentant une turbidité initiale inférieure ou égale à 40 NTU, un grossissement conséquent des flocs formés et donc une décantation accélérée de ces flocs. Une telle combinaison permet ainsi d'accélérer la vitesse de décantation des flocs et de produire une eau surnageante quasiment non turbide, quelle que soit sa turbidité initiale.

De préférence, le sel inorganique polyvalent est un sel de métal trivalent choisi parmi le sulfate ferrique, le sulfate d'aluminium, le polyhydroxychlorure d'aluminium et leurs mélanges. De préférence encore, le sel de métal trivalent est le sulfate ferrique hydraté. Ces composés sont bien connus et disponibles commercialement.

De préférence, le sulfate ferrique hydraté est présent dans le volume d'eau à traiter à une teneur allant de 8 à 15 ppm exprimé en Fe.

Un alginate de sodium convenant particulièrement bien à la présente invention est le produit vendu sous la dénomination commerciale « PROTANAL® LF200 alginate » par la société FMC BioPolymer.

De préférence, l'alginate de sodium est présent dans ladite première couche à une teneur allant de 0,1 à 10% en poids, de préférence encore allant de 3 à 6% en poids, par rapport au poids de ladite première couche. De préférence, la teneur en alginate de sodium dans l'eau à traiter est de 5 à 10 ppm.

La première couche peut également comprendre au moins un polymère cationique hydrosoluble.

De préférence, le polymère cationique hydrosoluble est un polymère cationique hydrosoluble de diallyldiméthylammonium chlorure, de préférence de très haut poids moléculaire, par exemple de poids moléculaire supérieur ou égal à 500 000 D. Un composé convenant particulièrement pour la présente invention est le polymère de diallyldiméthylammonium chlorure vendu sous forme de poudre sous la dénomination commerciale « FLOBEADS^{®} DW 45 PWG » par la société SNF.

De préférence, le polymère cationique est présent dans le volume d'eau à traiter à une teneur allant de 1 à 3 ppm.

De préférence, la première couche comprend en outre un système désintégrant. Par « système désintégrant », on entend, selon la présente invention, un système dont le ou les composés vont réagir immédiatement au contact de l'eau pour conduire à la désintégration rapide, de préférence en moins d'une minute, de préférence encore en moins de 30 secondes, de la première couche.

De préférence, le système désintégrant comprend au moins un agent désintégrant choisi parmi la cellulose et ses dérivés, les associations effervescentes d'un polyacide organique hydrosoluble et d'une base faible, et leurs mélanges.

Dans une forme de réalisation de l'invention, l'agent désintégrant est une cellulose, par exemple amorphe ou cristalline. Un exemple de cellulose amorphe convenant à la présente invention est le produit vendu sous la dénomination commerciale « ARBOCEL^{®} A300 » par la société J.Rettenmaier & Söhne. Un exemple de cellulose microcristalline convenant à la présente invention est le produit vendu sous la dénomination commerciale « VIVAPUR^{®} 200 » par la société J.Rettenmaier & Sôhne.

Dans une autre forme de réalisation de l'invention, l'agent désintégrant est formé de l'association effervescente d'une base faible et du sel de métal trivalent décrit ci-dessus. De préférence, la base faible est le bicarbonate de sodium.

De préférence, l'agent désintégrant est présent dans la première couche à une teneur inférieure ou égale à 50% en poids, de préférence à une teneur allant de 20% à 40%, en poids, par rapport au poids de la première couche.

La combinaison d'un système floculant et d'un système désintégrant tels que définis ci-dessus dans la première couche du produit selon l'invention permet de diffuser rapidement dans l'eau à traiter les coagulants et les floculants, et ce du fait de la désintégration immédiate, de préférence en moins d'une minute, et de préférence encore en moins de trente secondes, de cette première couche au contact de l'eau. Ainsi, la clarification de l'eau peut avoir lieu sans délai. La sédimentation des matières précipitées s'effectue en quelques minutes et conduit à l'obtention d'une eau présentant une très faible turbidité.

La première couche du produit selon l'invention peut également comprendre un polymère anionique à haut poids moléculaire. Dans un mode de réalisation de l'invention, ledit polymère anionique à haut poids moléculaire présente un poids moléculaire supérieur ou égal à 5 000 000 D, et de préférence supérieur ou égal à 10 000 000 D.

De préférence, ledit polymère anionique à haut poids moléculaire est présent dans ladite première couche à une teneur allant de 0,01 à 0,4% en poids par rapport au poids de ladite première couche.

De préférence, ledit polymère anionique à haut poids moléculaire est un copolymère hydrosoluble d'acrylate de sodium. Des copolymères hydrosolubles d'acrylate de sodium convenant particulièrement bien à la présente invention sont les produits vendus sous la dénomination commerciale « FLOPAM^{®} AN 934 » par la société SNF.

De préférence, la teneur en copolymères d'acrylate de sodium dans l'eau à traiter est de 0,1 à 0,5 ppm.

Dans une forme de réalisation de l'invention, la première couche comprend un absorbeur d'humidité, comme par exemple du trisilicate de magnésium. Un tel absorbeur d'humidité facilite le pastillage du produit selon l'invention lors de sa fabrication, en présence d'une humidité relative élevée de l'atmosphère environnant la pastilleuse. De préférence, le trisilicate de magnésium est présent dans la première couche à une teneur inférieure ou égale à 3% en poids, de préférence encore inférieure ou égale à 1% en poids, par rapport au poids de la première couche.

La deuxième couche du produit selon l'invention comprend au moins un désinfectant libérant du chlore actif au contact de l'eau.

De préférence, la deuxième couche comprend en outre au moins un excipient du désinfectant, ledit excipient libérant le désinfectant dans l'eau à un taux contrôlé tel que l'association excipient-désinfectant libère de 0,1 à 6 mg/l de chlore actif par heure.

Ainsi, grâce au produit selon l'invention, la libération de chlore actif est contrôlée, quelle que soit la vitesse de dissolution intrinsèque du désinfectant dans l'eau. Ainsi, tout désinfectant peut être utilisé et il en résulte une simplicité de fabrication du produit.

Le désinfectant libérant du chlore actif peut être tout dérivé de chlore connu pour libérer du chlore actif, quelle que soit la vitesse intrinsèque de dissolution de ce dérivé dans l'eau. De préférence, le désinfectant est choisi parmi le sel de sodium de N-chloro-4-méthylbenzène sulfonamide sous forme anhydre ou dihydratée, le sel de sodium de 1,3-dichloro-s-triazine-2,4,6 trione sous forme anhydre ou dihydratée, et leurs mélanges. De préférence encore, le désinfectant est le sel de sodium de 1,3-dichloro-s-triazine-2,4,6 trione sous forme dihydratée. Un tel composé est bien connu et est disponible commercialement auprès de la société OXYCHEM.

Par « excipient », on entend, au sens de la présente demande, un ou plusieurs composés distincts du désinfectant et servant de véhicule à ce désinfectant, qui sont de plus inertes chimiquement vis-à-vis du désinfectant, c'est-à-dire qui ne réagissent pas avec lui, tant lorsque le produit de l'invention est sous forme stockée que lors de son utilisation dans l'eau à purifier.

De préférence, l'excipient de la deuxième couche du produit selon l'invention libère le désinfectant dans l'eau à un taux contrôlé tel que l'association excipient-désinfectant libère de 0,1 à 6 mg/l de chlore actif par heure, de préférence à un taux allant de 0,2 à 4 mg/l de chlore actif par heure. Ainsi, la diffusion du désinfectant dans l'eau à traiter est progressive et contrôlée et n'interfère pas avec l'étape de clarification.

Dans une forme de réalisation, l'excipient est choisi parmi les composés partiellement solubles hydrophiles gonflant dans l'eau. Ainsi, de préférence, l'excipient est choisi parmi les amidons modifiés, les amidons pré gélatinisés, la fécule de pomme de terre, et leurs mélanges. Un exemple d'amidon pré gélatinisé convenant particulièrement à la présente invention est le produit vendu sous la dénomination commerciale « LYCATAB^{®} PGS » par la société Roquette.

La libération progressive du désinfectant dans l'eau à traiter se fait par la diffusion de l'eau au sein de l'excipient imbibé associée à une désagrégation progressive de l'excipient libérant dans l'eau le chlore actif biocide.

Ainsi, grâce à la présence de l'excipient qui contrôle la libération du désinfectant dans la deuxième couche, et du fait que cette deuxième couche est distincte de la première couche, le désinfectant n'est pas entraîné avec les agents coagulants et floculants de la première couche qui diffusent très rapidement dans l'eau, notamment grâce au système désintégrant. Le désinfectant n'est donc pas prématurément consommé par les substances en suspension avant que ces dernières ne soient précipitées et sédimentent au fond du volume d'eau à traiter.

La deuxième couche du produit selon l'invention garde de préférence son intégrité pendant la première phase du traitement, c'est-à-dire pendant la clarification, qui dure généralement moins d'une minute, voire moins de trente secondes. La deuxième couche peut ensuite assurer sa fonction de désinfection par libération progressive et continue, en quelques minutes ou quelques heures selon la température de l'eau, du désinfectant qui va pouvoir agir sur les micro-organismes pathogènes susceptibles d'être présents dans l'eau à traiter, sans interférer avec les flocs formés lors de la première phase, concentrés au fond du volume à traiter.

De préférence, la deuxième couche comprend un système effervescent. En effet, un système effervescent facilite et contrôle la diffusion de l'eau entraînant la libération de chlore actif.

De préférence, le système effervescent comprend un mélange d'une base faible, telle que le bicarbonate de sodium, et d'un polyacide organique hydrosoluble, de préférence choisi parmi l'acide citrique, l'acide malique, l'acide tartrique, l'acide malonique, l'acide fumarique, l'acide maléique, l'acide adipique, l'acide succinique et leurs mélanges.

De préférence, le système effervescent est présent dans la deuxième couche à une teneur inférieure ou égale à 40% en poids, de préférence à une teneur allant de 10% à 30%, en poids, par rapport au poids de la deuxième couche.

Dans une forme préférée de réalisation de l'invention, la masse volumique de la deuxième couche immergée dans l'eau est strictement inférieure à 1 g/cm³, et de préférence va de 0,85 à 0,95 g/cm³. Ainsi, en fin de première phase, lorsque la première couche est totalement désagrégée, la deuxième couche remonte et flotte. Elle est alors totalement éloignée des flocs formés lors de la première phase et la libération progressive et continue du désinfectant peut se faire dans les meilleures conditions et sans consommation excessive et inutile d'agent désinfectant.

Le produit selon l'invention peut comprendre des composés additionnels comme des colorants, des parfums, etc...

De préférence, tous les composés constituant le produit selon l'invention sont de qualité alimentaire, c'est-à-dire peuvent être ingérés par l'homme sans danger pour sa santé.

Le produit selon l'invention peut avoir toute forme géométrique possible. Dans une forme de réalisation de l'invention, le produit est sous la forme d'une pastille ou d'une tablette et les deux couches sont adjacentes.

Dans une autre forme de réalisation de l'invention, est sous la forme d'un comprimé ou d'un galet, la première couche enrobant la deuxième couche qui forme un noyau.

Un autre objet de l'invention est un procédé de préparation d'un produit solide compacté de purification d'eau comprenant au moins une première couche et au moins une deuxième couche, caractérisé en ce qu'il comprend les étapes suivantes :
- a°) on prépare un premier mélange pulvérulent comprenant au moins un système floculant comprenant au moins un agent de densification tel que décrit ci-dessus et au moins un polyol de poids moléculaire inférieur ou égal à 10000 g/mol,
- b°) on prépare un deuxième mélange pulvérulent comprenant au moins un désinfectant libérant du chlore actif au contact de l'eau,
- c°) on précompacte le mélange obtenu en b°) dans une pastilleuse,
- d°) on rajoute dans la pastilleuse le mélange obtenu en a°) et on compacte le tout pour obtenir un produit bicouche.

Le produit selon l'invention est de préférence préparé par compression directe à l'aide d'une pastilleuse.

De préférence, le premier mélange pulvérulent comprend en outre au moins un absorbeur d'humidité, par exemple du trisilicate de magnésium. Un tel absorbeur d'humidité facilite le compactage de l'étape d°) du procédé de fabrication du produit selon l'invention, en présence d'une humidité relative élevée de l'atmosphère environnant la pastilleuse.

Dans une autre forme de réalisation, le produit selon l'invention peut comprendre, outre la première et la deuxième couche, une ou plusieurs couches additionnelles, comme par exemple une couche intermédiaire séparant la première et la deuxième couche ou encore une couche externe.

Le degré de compaction de la première couche et celui de la deuxième couche sont ajustés selon les taux de dissolution respectifs désirés pour chacune de ces couches au sein de l'eau à traiter.

La présente invention porte encore sur un procédé de purification d'un volume d'eau comprenant au moins l'étape d'introduire dans ledit volume d'eau un produit tel que décrit ci-dessus. Une fois le produit introduit dans le volume d'eau, ce dernier peut être agité, par exemple manuellement, pendant cinq minutes. On peut ensuite cesser l'agitation et laisser le volume d'eau décanter pendant quelques minutes, par exemple de 1 à 100 minutes. On peut alors éliminer les flocs qui ont décanté et on obtient alors un volume d'eau purifié.

Ainsi, de façon générale, la turbidité d'une eau à 20°C en cours de traitement avec le produit selon l'invention diminue rapidement et peut être inférieure à 5 NTU en moins de 15 minutes : un tel traitement peut conduire à l'obtention d'une eau présentant une turbidité finale inférieure à 2 NTU après 45 minutes.

La présente invention va maintenant être illustrée à l'aide des exemples suivants.

### EXEMPLES:

Ci-après est donnée la signification des termes utilisés dans les exemples qui suivent :
- Sulfate ferrique heptahydraté : sous forme de poudre, vendu par la société Dr. Lohmann.
- FLOBEADS^{®} DW 45 PWG : polymère cationique hydrosoluble de diallyldiméthylammonium chlorure sous forme de poudre, de poids moléculaire voisin de 500 000 D, vendu par la société SNF.
- DCCNa, 2H₂O: sel de sodium de 1,3-dichloro-s-triazine-2,4,6 trione sous forme de dihydrate, encore appelé dichloroisocyanurate de sodium sous forme de dihydrate, sous forme de poudre
- LYCATAB^{®} PGS: amidon gélatinisé, sous forme de poudre, vendu par la société Roquette.
- VIVAPUR^{®} 200: cellulose microcristalline sous forme de poudre vendue par la société J.Rettenmaier & Söhne
- FLOPAM^{®} AN 934 PWG: copolymère anionique d'acrylate de sodium de poids moléculaire voisin de 15 000 000 D, vendu par la société SNF.
- MANUGEL^{®} GMB: alginate de sodium, de viscosité voisine de 200 à 400 mPa.s à 1% en solution aqueuse, sous forme de poudre, vendu par la société ISP.
- MILLISIL^{®} E10: quartz broyé vendu par la société Sibelco France et dont les particules satisfont à la granulométrie suivante :
   pourcentages massiques de refus au tamis suivants (merci de confirmer ou corriger ou préciser:
      D10 :>80µm,
      D50 :>30µm, et
      D90 :>5µm.
- MACROSORB^{®} MS33 F: trisilicate de magnésium sous forme de poudre, vendu par la société INEOS Silicas.
- NEOSORB: sorbitol (poids moléculaire 182 g/mol) sous forme de poudre, vendu par la Société Roquette.
- Mannitol : de poids moléculaire 182 g/mol, sous forme de poudre, vendu par la Société Roquette.
- LYCATAB^{®} DSH : maltodextrine (poids moléculaire allant d'environ 342 à environ 3258 g/mol) sous forme de poudre, vendue par la société Roquette.

### EXEMPLE 1 (selon l'invention):

On dispose dans un container de 200 litres d'eau de rivière de turbidité de 20 NTU.

Le pH de l'eau à traiter est voisin de 7,5 et sa température est 15°C

En vue de traiter ce volume de 200 litres d'eau faiblement turbide, on prépare une pastille bicouche de 44,1 g, la première couche assurant la clarification étant appelée la couche A et pesant 33,6 g, la deuxième couche assurant la désinfection de l'eau à traiter étant appelée la couche B et pesant 10,5 g. Le diamètre de la pastille est de 45 mm. La pastille est préparée par compression directe. La composition des couches est donnée ci-après:

| **Composition couche A** | q dans la couche A |
|---|---|
| Sulfate ferrique heptahydraté | 9 |
| FLOBEADS^{®} DW 45 PWG | 0,4 |
| VIVAPUR^{®} 200 | 7,0 |
| Bicarbonate de sodium | 6,0 |
| FLOPAM^{®} AN 934 | 0,1 |
| MILLISIL^{®} E10 | 8 |
| LYCATAB^{®} DSH | 1,5 |
| Alginate de sodium | 1,3 |
| MACROSORB^{®} MS33 F | 0,3 |

Dans cette couche A, l'agent de densification (MILLISIL^{®} E10) représente 23,8% en poids du poids de la couche, et le polyol de poids moléculaire inférieur ou égal à 10000 g/mol (LYCATAB^{®} DSH) représente 18,7% du poids de l'agent de densification.

| **Composition couche B** | g.dans la couche B |
|---|---|
| LYCATAB^{®} PGS | 6,0 |
| Acide adipique | 1,4 |
| Bicarbonate de sodium | 2,1 |
| DCCNa, 2H₂O | 1,0 |

La pastille obtenue, en particulier sa couche A, est très cohésive. Elle ne présente aucun risque d'effritement et sa manipulation ne pose aucun problème.

Introduite dans l'eau, sous agitation manuelle pendant trois minutes, la pastille tombe au fond du récipient et la couche A de la pastille se désagrège par effervescence en trente secondes environ.

Les flocs se forment très rapidement, en quelques minutes. On arrête l'agitation et on laisse décanter les matières en suspension. La décantation des flocs est effective en vingt minutes. Très peu de flocs restent en surface.

La partie de la pastille restante (couche B) remonte à la surface, flotte et reste en surface. En se désagrégeant progressivement, elle libère ainsi le chlore actif en 90 minutes à 15°C.

Le taux de chlore actif final mesuré dans l'eau décantée et brassée est de 0,7 mg/l mesuré quatre vingt dix minutes après l'arrêt de l'agitation. La turbidité finale est de 1,5 NTU. Le taux de Fe dosé est de 0,2 mg/l.

Ainsi, malgré une turbidité initiale de l'eau à traiter relativement faible, l'étape de clarification a été réalisée efficacement et la purification de l'eau a pu être réalisée de façon optimale, ce que montrent les résultats de Fe dosé dans l'eau traitée.

### EXEMPLE 2 (comparatif) :

On dispose dans une cuve de 200 litres d'eau identique à celle mise en oeuvre dans l'exemple 1, et de même turbidité, à savoir 20 NTU.

Le pH de l'eau à traiter est voisin de 7,5 et sa température est 15°C.

En vue de traiter ce volume de 200 litres d'eau faiblement turbide, on prépare une pastille bicouche comprenant la même couche B que la pastille de l'Exemple 1, mais dont la couche A est exempte de polyol de poids moléculaire inférieur ou égal à 10000 g/mol et d'agent de densification. Ainsi, la couche A assurant la clarification de la pastille du présent exemple présente la composition suivante :

| **Composition couche A** | g dans la couche A |
|---|---|
| Sulfate ferrique heptahydraté | 9 |
| FLOBEADS^{®} DW 45 PWG | 0,4 |
| VIVAPUR^{®} 200 | 7,0 |
| Bicarbonate de sodium | 6,0 |
| FLOPAM^{®} AN 934 | 0,1 |
| Alginate de sodium | 1,3 |
| MACROSORB^{®} MS33 F | 0,3 |

La couche B de la pastille du présent exemple possède la même composition et le même poids que celle de l'Exemple 1. Le diamètre de la pastille est de 45 mm. La pastille est préparée par compression directe comme dans l'Exemple 1.

Introduite dans l'eau, sous agitation manuelle pendant trois minutes, la pastille tombe au fond du récipient et la couche A de la pastille se désagrège par effervescence en trente secondes environ.

Des flocs se forment rapidement en quelques minutes.

On arrête l'agitation et on laisse décanter les matières en suspension. La décantation d'une partie des flocs est effective en une vingtaine de minutes : toutefois, il reste des particules fines de floc en surface et dans le volume d'eau, sédimentant très lentement. La partie de la pastille restante (couche B) remonte à la surface, flotte et reste en surface. En se désagrégeant progressivement, elle libère ainsi le chlore actif en 90 minutes à 15°C.

Le taux de chlore actif mesuré dans l'eau, après transvasement sans perturber le décantat déposé au fond du récipient, puis brassage de l'eau récupérée, est de 0,5 mg/l, quatre vingt dix minutes après l'arrêt de l'agitation.

Ainsi, une partie du chlore actif a été consommé par les flocs restant en surface après l'étape de clarification.

La turbidité finale de l'eau décantée est de 7 NTU, ce qui est supérieur à la recommandation de l'OMS (inférieure ou égale à 5 NTU) et bien supérieur à la turbidité de 1,5 NTU obtenue avec la pastille selon l'invention de l'Exemple 1. Le taux de Fe dosé est de 0,3 mg/l. Des flocs restent en surface.

### EXEMPLE 3 (comparatif) :

On dispose dans une cuve de 200 litres d'eau de rivière de turbidité de 20 NTU, identique à celle mise en oeuvre dans l'exemple 1.

Le pH de l'eau à traiter est voisin de 7,5 et sa température est 15°C.

En vue de traiter ce volume de 200 litres d'eau faiblement turbide, on prépare une pastille bicouche comprenant la même couche B que la pastille de l'Exemple 1, mais dont la couche A est exempte de polyol de poids moléculaire inférieur ou égal à 10000 g/mol. Ainsi, la couche A assurant la clarification de la pastille du présent exemple présente la composition suivante :

| **Composition couche A** | q dans la couche A |
|---|---|
| Sulfate ferrique heptahydraté | 9 |
| FLOBEADS^{®} DW 45 PWG | 0,4 |
| VIVAPUR^{®} 200 | 7,0 |
| Bicarbonate de sodium | 6,0 |
| FLOPAM^{®} AN 934 | 0,1 |
| MILLISIL^{®} E10 | 8 |
| Alginate de sodium | 1,3 |
| MACROSORB^{®} MS33 F | 0,3 |

La couche B de la pastille du présent exemple possède la même composition et le même poids que celle de l'Exemple 1. Le diamètre de la pastille est de 45 mm. La pastille est préparée par compression directe comme dans l'Exemple 1. La couche A de la pastille obtenue est particulièrement friable : la pastille obtenue est difficilement transportable et manipulable.

### EXEMPLE 4 (selon l'invention):

On dispose dans un container de 200 litres d'eau issue de la même eau que dans l'Exemple 1.

On prépare une pastille bicouche similaire à celle de la pastille de l'Exemple 1 mais dont la composition de la couche A est modifiée par remplacement de la maltodextrine par du sorbitol. Ainsi, la composition de la couche A de la pastille du présent exemple est la suivante :

| **Composition couche A** | q dans la couche A |
|---|---|
| Sulfate ferrique heptahydraté | 9 |
| FLOBEADS^{®} DW 45 PWG | 0,4 |
| VIVAPUR^{®} 200 | 7,0 |
| Bicarbonate de sodium | 6,0 |
| FLOPAM^{®} AN 934 | 0,1 |
| MILLISIL^{®} E10 | 8 |
| Sorbitol | 1,7 |
| Alginate de sodium | 1,3 |
| MACROSORB^{®} MS33 F | 0,3 |

Dans cette couche A, l'agent de densification (MILLISIL^{®} E10) représente 23,7% en poids du poids de la couche, et le polyol de poids moléculaire inférieur ou égal à 10000 g/mol (sorbitol) représente 21,2% du poids de l'agent de densification.

La couche B de la pastille du présent exemple possède la même composition et le même poids que celle de l'Exemple 1. Le diamètre de la pastille est de 45 mm. La pastille est préparée par compression directe comme dans l'Exemple 1.

La pastille, en particulier la couche A, présente une bonne cohésion et ne présente aucune tendance à l'effritement.

Le même protocole qu'à l'Exemple 1 est répété. Les flocs se forment en deux minutes.

La décantation des flocs est effective en 15 minutes et le taux de chlore actif final mesuré dans l'eau décantée et brassée est de 0,8 mg/l mesuré après 30 minutes. Aucun floc ne reste en surface. La turbidité finale est de 1,2 NTU. Le taux de Fe résiduel dosé est de 0,15 mg/l.

### EXEMPLE 5 (selon l'invention):

Cet exemple illustre l'invention dans un cas où la turbidité de l'eau à traiter est relativement forte. Ainsi, on dispose dans un container de 200 litres d'eau de turbidité de 550 NTU. La température de l'eau est d'environ +12°C.

La composition de la pastille bicouche et la procédure suivie pour le traitement de l'eau sont les mêmes que celles décrites dans l'Exemple 1.

On introduit la pastille dans le container d'eau à traiter.

La décantation des flocs est effective en 25 minutes et le taux de chlore actif final mesuré dans l'eau décantée et brassée est de 0,6 mg/l mesuré après 100 minutes. La turbidité finale est de 1,5 NTU. Le taux de Fe résiduel dosé est de 0,15 mg/l.

### EXEMPLE 6 (selon l'invention)

On dispose dans un container de 200 litres d'eau issue de la même eau que dans l'Exemple 1 et de même turbidité, à savoir 20 NTU.

On prépare une pastille bicouche similaire à celle de l'Exemple 1 dont la composition de la couche A est modifiée par remplacement de la maltodextrine par du mannitol. Ainsi, la composition de la couche A de la pastille du présent exemple est la suivante :

| **Composition couche A** | g dans la couche A |
|---|---|
| Sulfate ferrique heptahydraté | 9 |
| FLOBEADS^{®} DW 45 PWG | 0,4 |
| VIVAPUR^{®} 200 | 7,0 |
| Bicarbonate de sodium | 6,0 |
| FLOPAM^{®} AN 934 | 0,1 |
| MILLISIL^{®} E10 | 8 |
| Mannitol | 1,7 |
| Alginate de sodium | 1,3 |
| MACROSORB^{®} MS33 F | 0,3 |

Dans cette couche A, l'agent de densification (MILLISIL^{®} E10) représente 23,7% en poids du poids de la couche, et le polyol de poids moléculaire inférieur ou égal à 10000 g/mol (mannitol) représente 21,2% du poids de l'agent de densification.

La couche B de la pastille du présent exemple possède la même composition et le même poids que celle de l'Exemple 1. Le diamètre de la pastille est de 45 mm. La pastille est préparée par compression directe comme dans l'Exemple 1.

Comme dans l'Exemple 1, la pastille, en particulier la couche A, présente une très bonne cohésion et ne présente aucune tendance à l'effritement.

Le même protocole qu'à l'Exemple 1 est répété. Les flocs se forment en deux minutes.

La décantation des flocs est effective en 15 minutes et le taux de chlore actif final mesuré dans l'eau décantée et brassée est de 0,7 mg/l mesuré après 30 minutes. Aucun floc ne reste en surface. La turbidité finale est de 1,4 NTU. Le taux de Fe résiduel dosé est de 0,20 mg/l.

### EXEMPLE 7 (selon l'invention)

On dispose dans un container de 200 litres d'eau issue de la même eau que dans l'Exemple 1.

On prépare une pastille bicouche similaire à celle de l'Exemple 1 dont la composition de la couche A est modifiée en ce que les concentrations respectives de l'agent de densification et de la maltodextrine sont augmentées. Ainsi, la composition de la couche A de la pastille du présent exemple est la suivante :

| **Composition couche A** | q dans la couche A |
|---|---|
| Sulfate ferrique heptahydraté | 9 |
| FLOBEADS^{®} DW 45 PWG | 0,4 |
| VIVAPUR^{®} 200 | 7,0 |
| Bicarbonate de sodium | 6,0 |
| FLOPAM^{®} AN 934 | 0,1 |
| MILLISIL^{®} E10 | 10 |
| LYCATAB^{®} DSH | 2,5 |
| Alginate de sodium | 1,3 |
| MACROSORB^{®} MS33 F | 0,3 |

Dans cette couche A, l'agent de densification (MILLISIL^{®} E10) représente 27,3% en poids du poids de la couche, et le polyol de poids moléculaire inférieur ou égal à 10000 g/mol (LYCATAB^{®} DSH) représente 25% du poids de l'agent de densification.

La couche B de la pastille du présent exemple possède la même composition et le même poids que celle de l'Exemple 1. Le diamètre de la pastille est de 45 mm. La pastille est préparée par compression directe comme dans l'Exemple 1.

Comme dans l'Exemple 1, la pastille, en particulier la couche A, présente une bonne cohésion et ne présente aucune tendance à l'effritement.

Le même protocole qu'à l'Exemple 1 est répété. Les flocs se forment en deux minutes.

La décantation des flocs est effective en 15 minutes et le taux de chlore actif final mesuré dans l'eau décantée et brassée est de 0,7 mg/l mesuré après 30 minutes. Aucun floc ne reste en surface. La turbidité finale est de 1,1 NTU. Le taux de Fe résiduel dosé est de 0,20 mg/l.

### EXEMPLE 8 (selon l'invention)

On dispose dans un container de 200 litres d'eau issue de la même eau que dans l'Exemple 1.

On prépare une pastille bicouche similaire à celle de l'Exemple 7 dont la composition de la couche A est modifiée par remplacement de la maltodextrine par du sorbitol. Ainsi, la composition de la couche A de la pastille du présent exemple est la suivante:

| **Composition couche A** | q dans la couche A |
|---|---|
| Sulfate ferrique heptahydraté | 9 |
| FLOBEADS^{®} DW 45 PWG | 0,4 |
| VIVAPUR^{®} 200 | 7,0 |
| Bicarbonate de sodium | 6,0 |
| FLOPAM^{®} AN 934 | 0,1 |
| MILLISIL^{®} E10 | 10 |
| Sorbitol | 2,9 |
| Alginate de sodium | 1,3 |
| MACROSORB^{®} MS33 F | 0,3 |

Dans cette couche A, l'agent de densification (MILLISIL^{®} E10) représente 27% en poids du poids de la couche, et le polyol de poids moléculaire inférieur ou égal à 10000 g/mol (sorbitol) représente 29% du poids de l'agent de densification.

La couche B de la pastille du présent exemple possède la même composition et le même poids que celle de l'Exemple 1. Le diamètre de la pastille est de 45 mm. La pastille est préparée par compression directe comme dans l'Exemple 1. La pastille, en particulier la couche A, présente une bonne cohésion et ne présente aucune tendance à l'effritement.

Le même protocole qu'à l'Exemple 1 est répété. Les flocs se forment en deux minutes.

La décantation des flocs est effective en 15 minutes et le taux de chlore actif final mesuré dans l'eau décantée et brassée est de 0,6 mg/l mesuré après 30 minutes. Aucun floc ne reste en surface. La turbidité finale est de 1,2 NTU. Le taux de Fe résiduel dosé est de 0,20 mg/l.

## Revendications

1. Produit solide compacté de purification d'eau comprenant :
- au moins une première couche comprenant au moins un système floculant, et
- au moins une deuxième couche comprenant au moins un désinfectant libérant du chlore actif au contact de l'eau,
**caractérisé en ce que** :
ledit système floculant comprend au moins un polyol de poids moléculaire inférieur ou égal à 10 000 g/mol et au moins un agent de densification comprenant une composition de particules de matière insolubles dans l'eau et chimiquement inactives vis-à-vis du chlore actif et présentant une granulométrie telle que 80% de la masse de l'agent de densification est constituée de particules de taille moyenne allant de 5 µm à 80 µm.

2. Produit selon la revendication 1, **caractérisé en ce que** l'agent de densification est choisi parmi les aluminosilicates naturels hydratés, comme le kaolin, ou calcinés, les aluminosilicates alcalins, comme les feldspath sodiques ou potassiques, les argiles, les métasilicates de calcium, comme la wollastonite, les silices, comme le sable, le quartz, broyé ou non, les carbonates de calcium naturels broyés, les silicates de magnésium hydratés, comme le talc, et leurs mélanges.

3. Produit selon l'une quelconque des revendications précédentes, **caractérisé en ce que** le polyol a un poids moléculaire inférieur ou égal à 5 000 g/mol, de préférence inférieur ou égal à 3 500 g/mol.

4. Produit selon l'une quelconque des revendications précédentes, **caractérisé en ce que** le polyol est un polyol comprenant au moins cinq atomes de carbone, de préférence au moins six atomes de carbone, et au moins deux groupements hydroxyle (-OH).

5. Produit selon la revendication précédente, **caractérisé en ce que** le polyol est choisi parmi le sorbitol, le mannitol, la maltodextrine, le xylitol et leurs mélanges.

6. Produit selon la revendication 4, **caractérisé en ce que** le polyol est choisi parmi le sorbitol, le mannitol, la maltodextrine et leurs mélanges.

7. Produit selon l'une quelconque des revendications précédentes, **caractérisé en ce que** l'agent de densification est présent dans la première couche à une teneur allant de 15 à 30% en poids, de préférence de 20 à 25% en poids, par rapport au poids total de la première couche.

8. Produit selon l'une quelconque des revendications précédentes, **caractérisé en ce que** le polyol est présent dans la première couche à une teneur allant de 15 à 35% en poids, de préférence de 20 à 30% en poids, par rapport au poids de l'agent de densification.

9. Produit selon l'une quelconque des revendications précédentes, **caractérisé en ce que** le système floculant comprend en outre au moins un sel de métal trivalent.

10. Produit selon l'une quelconque des revendications précédentes, **caractérisé en ce que** le système floculant comprend en outre un alginate de sodium.

11. Produit selon l'une quelconque des revendications précédentes, **caractérisé en ce que** ladite première couche comprend en outre un système désintégrant comprenant au moins un agent désintégrant choisi parmi la cellulose et ses dérivés, les associations effervescentes d'un polyacide organique hydrosoluble et d'une base faible, et leurs mélanges.

12. Produit selon l'une quelconque des revendications précédentes, **caractérisé en ce que** la deuxième couche comprend en outre au moins un excipient du désinfectant, ledit excipient libérant le désinfectant dans l'eau à un taux contrôlé tel que l'association excipient-désinfectant libère de 0,1 à 6 mg/l de chlore actif par heure, de préférence de 0,2 à 4 mg/l de chlore actif par heure.

13. Produit selon l'une quelconque des revendications précédentes, **caractérisé en ce que** le désinfectant est choisi parmi le sel de sodium de N-chloro-4-méthylbenzène sulfonamide sous forme anhydre ou dihydratée, le sel de sodium de 1,3-dichloro-s-triazine-2,4,6 trione sous forme anhydre ou dihydratée, et leurs mélanges, de préférence, le désinfectant est le sel de sodium de 1,3-dichloro-s-triazine-2,4,6 trione sous forme dihydratée.

14. Produit selon l'une quelconque des revendications précédentes, **caractérisé en ce que** la masse volumique de la deuxième couche immergée dans l'eau est strictement inférieure à 1 g/cm³, et de préférence va de 0,85 à 0,95 g/cm³.

15. Procédé de purification d'un volume d'eau de turbidité initiale inférieure à 40 NTU comprenant au moins l'étape d'introduire dans ledit volume d'eau un produit selon l'une quelconque des revendications 1 à 14.

## Patentansprüche

1. Verdichtetes festes Produkt zur Reinigung von Wasser, umfassend:
- mindestens eine erste Schicht, umfassend mindestens ein Flockulierungssystem, und
- mindestens eine zweite Schicht, umfassend mindestens ein Desinfektionsmittel, das bei Kontakt mit Wasser aktives Chlor freigibt,
**dadurch gekennzeichnet, dass**:
das Flockulierungssystem mindestens ein Polyol mit einem Molekulargewicht von weniger als oder gleich 10 000 g/mol umfasst, und mindestens ein Verdichtungsmittel, umfassend eine Zusammensetzung aus wasserunlöslichen und chemisch gegenüber Chlor inaktiven Materiepartikeln und aufweisend eine derartige Granulometrie, dass 80 % der Masse des Verdichtungsmittels aus Partikeln von mittleren Größe besteht, die von 5 µm bis 80 µm reichen.

2. Produkt nach Anspruch 1, **dadurch gekennzeichnet, dass** das Verdichtungsmittel ausgewählt ist aus hydrierten, wie Kaolin, oder kalzinierten natürlichen Aluminosilikaten, alkalinen Aluminosilikaten, wie Natrium- oder Kalium-Feldspat, Tonen, Calcium-Metasilikaten, wie Wollastonit, Kieselsäuren, wie Sand, Quarz, gemahlen oder nicht, gemahlenen natürlichen Calciumcarbonaten, hydrierten Magnesiumsilikaten wie Talk und ihren Mischungen.

3. Produkt nach einem der vorhergehenden Ansprüche, **dadurch gekennzeichnet, dass** das Polyol ein Molekulargewicht von weniger als oder gleich 5000 g/mol, vorzugsweise weniger als oder gleich 3500 g/mol aufweist.

4. Produkt nach einem der vorhergehenden Ansprüche, **dadurch gekennzeichnet, dass** das Polyol ein Polyol ist, das mindestens fünf Kohlenstoffatome aufweist, vorzugsweise mindestens sechs Kohlenstoffatome und mindestens zwei Hydroxylgruppen (-OH).

5. Produkt nach dem vorhergehenden Anspruch, **dadurch gekennzeichnet, dass** das Polyol ausgewählt ist aus Sorbitol, Mannitol, Maltodextrin, Xylitol und ihren Mischungen.

6. Produkt nach Anspruch 4, **dadurch gekennzeichnet, dass** das Polyol ausgewählt ist aus Sorbitol, Mannitol, Maltodextrin und ihren Mischungen.

7. Produkt nach einem der vorhergehenden Ansprüche, **dadurch gekennzeichnet, dass** das Verdichtungsmittel in der ersten Schicht mit einem Gehalt vorhanden ist, der von 15 bis 30 Gew.-%, vorzugsweise von 20 bis 25 Gew.-% mit Bezug auf das Gesamtgewicht der ersten Schicht reicht.

8. Produkt nach einem der vorhergehenden Ansprüche, **dadurch gekennzeichnet, dass** das Polyol in der ersten Schicht mit einem Gehalt vorhanden ist, der von 15 bis 35 Gew.-%, vorzugsweise von 20 bis 30 Gew.-% mit Bezug auf das Gewicht des Verdichtungsmittels reicht.

9. Produkt nach einem der vorhergehenden Ansprüche, **dadurch gekennzeichnet, dass** die Flockulierungssystem außerdem mindestens ein dreiwertiges Metallsalz umfasst.

10. Produkt nach einem der vorhergehenden Ansprüche, **dadurch gekennzeichnet, dass** das Flockulierungssystem außerdem ein Natriumalginat umfasst.

11. Produkt nach einem der vorhergehenden Ansprüche, **dadurch gekennzeichnet, dass** die erste Schicht außerdem ein Sprengsystem umfasst, umfassend mindestens ein Sprengmittel, ausgewählt aus Cellulose und ihren Derivaten, den sprudelnden Assoziationen einer wasserlöslichen organischen Polysäure und einer schwachen Base und ihren Mischungen.

12. Produkt nach einem der vorhergehenden Ansprüche, **dadurch gekennzeichnet, dass** die zweite Schicht außerdem mindestens einen Trägerstoff des Desinfektionsmittels umfasst, wobei der Trägerstoff das Desinfektionsmittel mit einer gesteuerten Rate in das Wasser freigibt, so dass die Assoziation Trägerstoff-Desinfektionsmittel von 0,1 bis 6 mg/l aktives Chlor pro Stunde, vorzugsweise von 0,2 bis 4 mg/l aktives Chlor pro Stunde freisetzt.

13. Produkt nach einem der vorhergehenden Ansprüche, **dadurch gekennzeichnet, dass** das Desinfektionsmittel ausgewählt ist aus Natriumsalz von N-Chlor-4-methylbenzolsulfonamid in wasserfreier oder Dihydratform, Natriumsalz von 1,3-Dichlor-s-triazin-2,4,6-trion in wasserfreier oder Dihydratform, und ihren Mischungen, vorzugsweise ist das Desinfektionsmittel Natriumsalz von 1,3-Dichlor-s-triazin-2,4,6-trion in Dihydratform.

14. Produkt nach einem der vorhergehenden Ansprüche, **dadurch gekennzeichnet, dass** die Volumenmasse der zweiten Schicht, eingetaucht in Wasser, streng geringer als 1 g/cm³ ist und vorzugsweise von 0,85 bis 0,95 g/cm³ reicht.

15. Verfahren zur Reinigung eines Wasservolumens mit einer anfänglichen Trübung von weniger als 40 NTU, umfassend mindestens den Schritt des Einführens eines Produkts nach einem der Ansprüche 1 bis 14 in das Wasservolumen.

## Claims

1. A compacted solid product for purifying water comprising:
- at least one first layer comprising at least one flocculating system, and
- at least one second layer comprising at least one disinfectant which releases active chlorine in contact with water,
**characterized in that**:
said flocculating system comprises at least one polyol of molecular weight lower than or equal to 10 000 g/mol and at least one densifying agent comprising a composition of water-insoluble particles of material chemically inactive vis-a-vis the active chlorine and having a grain size such that 80% of the mass of the densifying agent consists of particles of average size ranging from 5 µm to 80 µm.

2. The product according to claim 1, **characterized in that** the densifying agent is selected from hydrated natural aluminosilicates, such as kaolin, or calcined, alkali aluminosilicates, such as sodium or potassium feldspar, clays, calcium metasilicates, such as wollastonite, silicas, such as sand, quartz, grinded or not, grinded natural calcium carbonates, hydrated magnesium silicates such as talc, and mixtures thereof.

3. The product according to any one of the preceding claims, **characterized in that** the polyol has a molecular weight lower than or equal to 5 000 g/mol, preferably lower than or equal to 3 500 g/mol.

4. The product according to any one of the preceding claims, **characterized in that** the polyol is a polyol comprising at least five carbon atoms, preferably at least six carbon atoms, and at least two hydroxyl groups (-OH).

5. The product according to the preceding claim, **characterized in that** the polyol is selected from sorbitol, mannitol, maltodextrin, xylitol and mixtures thereof.

6. The product according to claim 4, **characterized in that** the polyol is selected from sorbitol, mannitol, maltodextrin and mixtures thereof.

7. The product according to any one of the preceding claims, **characterized in that** the densifying agent is present in the first layer at a content ranging from 15 to 30% by weight, preferably from 20 to 25% by weight, relative to the total weight of the first layer.

8. The product according to any one of the preceding claims, **characterized in that** the polyol is present in the first layer at a content ranging from 15 to 35% by weight, preferably from 20 to 30% by weight, based on the weight of the densifying agent.

9. The product according to any one of the preceding claims, **characterized in that** the flocculating system further comprises at least one trivalent metal salt.

10. The product according to any one of the preceding claims, **characterized in that** the flocculating system further comprises a sodium alginate.

11. The product according to any one of the preceding claims, **characterized in that** said first layer further comprises a disintegrating system comprising at least one disintegrating agent selected from cellulose and its derivatives, the effervescent combinations of a water-soluble organic polyacid and a weak base, and mixtures thereof.

12. The product according to any one of the preceding claims, **characterized in that** the second layer further comprises at least one excipient for the disinfectant, said excipient releasing the disinfectant into water at a controlled rate such that the excipient-disinfectant combination releases from 0.1 to 6 mg/l of active chlorine per hour, preferably from 0.2 to 4 mg/l of active chlorine per hour.

13. The product according to any one of the preceding claims, **characterized in that** the disinfectant is selected from the sodium salt of N-chloro-4-methylbenzene sulfonamide in the anhydrous or dihydrate form, the sodium salt of 1,3-dichloro-s-triazine-2,4,6-trione in the anhydrous or dihydrate form, and mixtures thereof, preferably, the disinfectant is the sodium salt of 1,3-dichloro-s-triazine-2,4,6-trione in the dihydrate form.

14. The product according to any one of the preceding claims, **characterized in that** the density of the second layer immersed in water is strictly lower than 1 g/cm3, and preferably ranges from 0.85 to 0.95 g/cm³.

15. A method for purifying a volume of water of an initial turbidity lower than 40 NTU comprising at least the step of introducing said volume of water in a product according to any one of claims 1 to 14.
